# DEMANDE DE BREVET EUROPEEN

(11) **EP 2 328 335 A1**
(43) Date de publication de la demande: **01.06.2011**
(21) Numéro de dépôt: 10190199.9
(22) Date de dépôt: 05.11.2010
(51) Int. Cl.: H04M 3/533

(54) **Procédé de génération d'une annonce par un système de messagerie vocale d'un système de communication unifiée intégré dans un réseau social d'entreprise**

(30) Priorité: 30.11.2009 FR 0905780
(71) Demandeur: Alcatel Lucent, 75007 Paris (FR)
(72) Inventeur: Elleouet, Fatima, 29228, BREST (FR); Elleouet, Jérome, 29228, BREST (FR)
(74) Mandataire: Shamsaei Far, Hassan

(57) **Abrégé**

L'invention concerne un procédé de génération d'une annonce par un système (1) de messagerie vocale d'un système de communications unifiées intégré dans un réseau social d'entreprise, ledit procédé prévoyant, à la réception par ledit système de messagerie d'un appel transféré depuis un terminal d'un utilisateur, de :
- vérifier la présence d'une entrée relative à l'emploi du temps dudit utilisateur dans ledit réseau social et d'extraire des informations de ladite entrée ;
- vérifier la présence dans ledit réseau d'un identifiant pour l'appelant (5) et l'existence de relations professionnelles entre ledit appelant et ledit utilisateur ;
ledit procédé prévoyant en outre de générer une annonce (9) personnalisée permettant audit appelant d'accéder à des informations extraites en fonction des relations professionnelles existantes entre ledit appelant et ledit utilisateur.

## Description

L'invention concerne un procédé de génération d'une annonce par un système de messagerie vocale d'un système de communications unifiées intégré dans un réseau social d'entreprise, ainsi qu'un système de messagerie vocale d'un système de communications unifiées intégré dans un tel réseau comprenant des moyens pour mettre en oeuvre un tel procédé.

En particulier, un réseau social d'entreprise peut intégrer un système de communications unifiées permettant notamment à un utilisateur identifié dans ledit réseau de gérer les appels qu'il reçoit à partir d'au moins un terminal connecté audit système, par exemple un téléphone fixe ou un ordinateur personnel.

Les systèmes de communications unifiées les plus performants comprennent un système de messagerie vocale qui permet à un utilisateur de gérer de façon dynamique les messages vocaux qu'il reçoit, par exemple en lui donnant la possibilité d'archiver lesdits messages dans un dossier informatique ou encore de faire suivre lesdits messages à un autre utilisateur dans le réseau social d'entreprise.

Cependant, il existe actuellement peu de systèmes de communications unifiées proposant une gestion dynamique de l'annonce de messagerie vocale par le système de messagerie vocale.

Le brevet US-7 376 220 décrit un procédé permettant de préparer et d'actualiser de façon dynamique une annonce par un système de messagerie vocale, ledit procédé prévoyant, à la réception d'un appel par ledit système, de sélectionner un modèle d'annonce en se basant sur au moins une condition, d'identifier les paramètres présents dans ledit modèle, d'extraire les valeurs correspondant auxdits paramètres et de générer une annonce en utilisant les valeurs des paramètres conformément au modèle d'annonce.

Parmi les conditions de sélection du modèle d'annonce, le procédé prévoit d'utiliser l'identifiant de l'appelant, ledit identifiant étant vérifié par comparaison du numéro dudit appelant avec les numéros cibles enregistrés dans le système de messagerie.

De plus, parmi les paramètres présents dans le modèle d'annonce sélectionné, le procédé prévoit d'utiliser des informations sur l'emploi du temps de l'utilisateur du système de messagerie au moment de la réception de l'appel par ledit système.

Le procédé prévoit également, dans le cas d'un système de messagerie vocale intégré dans un réseau social, de sélectionner un modèle d'annonce et d'actualiser ledit modèle en fonction de paramètres entrés par l'administrateur dudit réseau. Par exemple, s'agissant d'un réseau social d'entreprise, les paramètres peuvent se rapporter aux horaires normaux de travail en vigueur dans ladite entreprise.

Cependant, ce procédé selon l'art antérieur présente des limites, notamment pour un système de communications unifiées dans un cadre professionnel, car il ne prend pas en compte les informations relatives aux relations professionnelles entre l'appelant et l'utilisateur, en particulier les informations provenant de l'arbre hiérarchique de l'entreprise de l'utilisateur et éventuellement dudit appelant.

En outre, l'utilisateur du système de messagerie vocale définit lui-même les conditions pour appliquer le bon modèle d'annonce en fonction de l'appelant, ce qui augmente le risque d'erreurs dû à une mauvaise configuration par ledit utilisateur.

L'invention vise à perfectionner l'art antérieur en proposant un procédé qui permet de générer de façon dynamique une annonce de messagerie vocale adaptée à l'emploi du temps de l'utilisateur, à l'identifiant de l'appelant dans un réseau social d'entreprise et aux relations professionnelles existantes entre l'appelant et l'utilisateur, et ce sans nécessiter une configuration préalable par ledit utilisateur.

A cet effet, selon un premier aspect, l'invention propose un procédé de génération d'une annonce par un système de messagerie vocale d'un système de communications unifiées intégré dans un réseau social d'entreprise, ledit procédé prévoyant, à la réception par ledit système de messagerie d'un appel transféré depuis un terminal d'un utilisateur, de :
- vérifier la présence d'une entrée relative à l'emploi du temps dudit utilisateur dans ledit réseau social et d'extraire des informations de ladite entrée ;
- vérifier la présence dans ledit réseau d'un identifiant pour l'appelant et l'existence de relations professionnelles entre ledit appelant et ledit utilisateur ;
ledit procédé prévoyant en outre de générer une annonce personnalisée permettant audit appelant d'accéder à des informations extraites en fonction des relations professionnelles existantes entre ledit appelant et ledit utilisateur.

Selon un deuxième aspect, l'invention propose un système de messagerie vocale d'un système de communications unifiées intégré dans un réseau social d'entreprise, ledit système comprenant :
- des moyens pour réceptionner un appel transféré depuis un terminal d'un utilisateur ;
- des moyens de vérification de la présence d'une entrée relative à l'emploi du temps dudit utilisateur dans ledit réseau social ;
- des moyens d'extraction des informations de ladite entrée ;
- des moyens de vérification de la présence dans ledit réseau d'un identifiant pour l'appelant et de l'existence de relations professionnelles entre ledit appelant et ledit utilisateur ;
- des moyens de génération d'une annonce personnalisée permettant audit appelant d'accéder à des informations extraites en fonction des relations professionnelles existantes entre ledit appelant et ledit utilisateur.

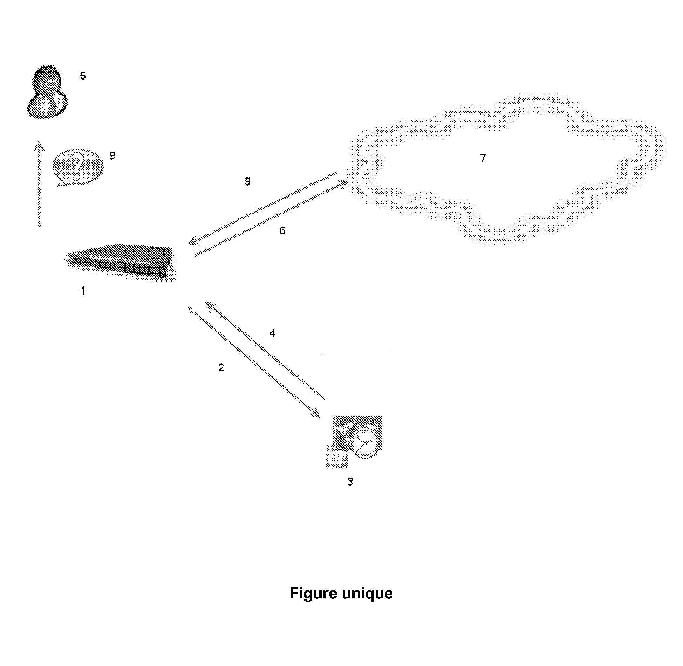

D'autres particularités et avantages de l'invention apparaîtront dans la description qui suit, faite en référence à la figure jointe représentant une architecture pour un réseau social d'entreprise, ladite architecture comprenant en particulier un système de communications unifiées intégrant un système de messagerie vocale apte à mettre en oeuvre un procédé de génération d'une annonce selon l'invention.

En relation avec cette figure, on décrit ci-dessous un procédé de génération d'une annonce par un système 1 de messagerie vocale d'un système de communications unifiées (non représenté) intégré dans un réseau social d'entreprise.

Lorsqu'un utilisateur reçoit un appel auquel il ne répond pas, ledit appel en absence est transféré de façon automatique au système 1 de messagerie vocale depuis le terminal dudit utilisateur (non représenté sur la figure). Le système 1 de messagerie vocale comprend donc des moyens pour réceptionner un tel appel en absence.

Le système 1 de messagerie vocale comprend des moyens de vérification de la présence d'une entrée relative à l'emploi du temps de l'utilisateur dans le réseau social. Cette vérification est initiée au moyen d'une requête 2 envoyée par le système 1 de messagerie vocale à un serveur 3 de calendrier du système de communications unifiées.

Le serveur 3 de calendrier envoie ensuite une notification 4 au système 1 de messagerie vocale, ladite notification indiquant audit système la présence ou non d'une entrée relative à l'emploi du temps de l'utilisateur. En particulier, l'entrée est relative à l'emploi du temps de l'utilisateur au moment du transfert de l'appel.

Le serveur 3 de calendrier peut comprendre des moyens aptes à fournir un service collaboratif de gestion d'emploi du temps pour les utilisateurs du réseau social d'entreprise. Parmi de tels serveurs, citons par exemple le serveur Microsoft Exchange® ou encore le serveur Domino® d'IBM®.

Pour de tels serveurs de calendrier, il est possible de développer des modules d'extension (pour l'anglais plug-in), lesdits modules étant aptes à envoyer une notification 4 de présence ou non d'une entrée au système 1 de messagerie vocale.

En outre, avec un serveur 3 de calendrier tel que Microsoft Exchange®, les informations sur la présence ou non d'une entrée relative à l'emploi du temps de l'utilisateur peuvent également être accessibles pour le service 1 de messagerie vocale par l'intermédiaire des services Internet fournis par ledit serveur.

Le système 1 de messagerie vocale comprend des moyens d'extraction des informations d'une entrée relative à l'emploi du temps de l'utilisateur, lesdits moyens étant mis en oeuvre lorsque la notification 4 du serveur 3 de calendrier confirme la présence d'une telle entrée dans le réseau social de l'entreprise.

Les informations ainsi extraites sont ensuite stockées, par exemple dans un fichier temporaire, et peuvent selon un mode de réalisation porter sur le contenu des champs de l'interface graphique utilisateur (GUI, pour l'anglais Graphical User Interface) du service de gestion d'emploi du temps, lesdits champs ayant été préalablement remplis par l'utilisateur pour définir l'entrée.

Par exemple, si l'entrée relative à l'emploi du temps de l'utilisateur concerne une réunion à laquelle participe ledit utilisateur au moment de la réception de l'appel, les informations extraites peuvent se rapporter au titre de ladite réunion, au lieu où elle se tient, à l'horaire prévue pour sa fin, au sujet sur lequel elle porte et aux noms des autres participants.

Le système 1 de messagerie vocale comprend en outre des moyens de vérification de la présence dans le réseau social de l'entreprise d'un identifiant pour l'appelant 5 et de l'existence de relations professionnelles entre ledit appelant et l'utilisateur. Cette vérification est initiée au moyen d'une requête 6 envoyée par le système 1 de messagerie vocale à un outil 7 d'interconnexion du réseau social d'entreprise.

Selon un mode de réalisation, le système 1 de messagerie vocale envoie une requête 6 à l'outil 7 d'interconnexion du réseau uniquement après avoir reçu une notification 4 confirmant la présence d'une entrée relative à l'emploi du temps de l'utilisateur dans ledit réseau.

En particulier, selon l'outil 7 d'interconnexion utilisé dans le réseau social de l'entreprise, un utilisateur peut être identifié dans ledit réseau par sa position hiérarchique dans ladite entreprise. Dans ce cas, l'outil 7 comprend un arbre hiérarchique qui permet de gérer en partie les communications entre les utilisateurs au sein du réseau.

Parmi les exemples d'outils d'interconnexion les plus utilisés dans les entreprises, citons notamment le logiciel Lotus Connections® d'IBM®, l'outil corporatif My Site® d'Alcatel-Lucent®, ou encore l'outil de gestion de contenu Microsoft SharePoint®.

Dans un arbre hiérarchique fourni par de tels outils, il est possible pour un utilisateur identifié dans le réseau social de l'entreprise d'obtenir des informations très complètes sur un autre utilisateur dudit réseau, comme son numéro de téléphone, une description de son poste, les projets sur lesquels il travaille ou a travaillé, et bien sûr la position hiérarchique qu'il occupe dans son service. Pour un arbre hiérarchique fourni par l'outil My Site®, ces informations peuvent être obtenues par un utilisateur au moyen d'une requête HTTP.

Le procédé selon l'invention permet d'éviter les problèmes de mise à jour, car l'arbre hiérarchique d'un réseau social d'entreprise est régulièrement actualisé par l'administrateur dudit réseau, notamment par l'intermédiaire d'une interface de programmation (pour l'anglais Application Programming Interface), ou par l'intermédiaire d'un kit de développement logiciel JAVA (SDK, pour l'anglais Software Development Kit) dans le cas de l'outil Lotus Connections®.

En outre, l'outil 7 d'interconnexion peut, à l'instar de Microsoft Sharepoint®, proposer un kit de développement logiciel (SDK) à l'attention de l'administrateur du réseau social pour développer une interface de programmation (API) et ainsi permettre des interactions entre ledit outil et le système 1 de messagerie vocale.

Dans ce mode de réalisation, le système 1 de messagerie vocale envoie une requête 6 à l'arbre hiérarchique de l'outil 7 d'interconnexion du réseau social d'entreprise pour obtenir un éventuel identifiant de l'appelant 5 dans le réseau social d'entreprise et la position hiérarchique dudit appelant par rapport à l'utilisateur.

Si l'appelant 5 possède un identifiant dans le réseau social, il peut être identifié par rapport à l'utilisateur comme étant par exemple un collègue dudit utilisateur, un subordonné, un responsable direct ou indirect, ou encore le responsable d'un autre service que celui dudit utilisateur.

En outre, si l'appelant 5 ne possède pas d'identifiant dans le réseau social de l'entreprise, il sera considéré comme une personne extérieure à ladite entreprise.

L'outil 7 d'interconnexion envoie ensuite une notification 8 au système 1 de messagerie vocale, ladite notification portant sur la présence ou non d'un identifiant pour l'appelant 5 dans le réseau social de l'entreprise et, dans l'affirmative, sur l'existence ou non de relations professionnelles entre ledit appelant et l'utilisateur.

Le système 1 de messagerie vocale comprend des moyens de génération d'une annonce 9 personnalisée permettant à l'appelant 5 d'accéder à des informations extraites en fonction des relations professionnelles existantes entre ledit appelant et l'utilisateur.

En particulier, suivant la position hiérarchique de l'appelant 5 par rapport à l'utilisateur, le niveau d'information fourni audit appelant dans l'annonce 9 sera différent.

Selon un mode de réalisation, les moyens de génération sont aptes à générer l'annonce 9 personnalisée en complétant un modèle standard avec les informations extraites en fonction des relations professionnelles existantes entre l'appelant 5 et l'utilisateur.

Les conditions d'adaptation du modèle standard en fonction des relations professionnelles entre l'appelant 5 et l'utilisateur sont entièrement sous la responsabilité de l'entreprise, ce qui permet d'éviter les problèmes dus à une mauvaise configuration par les utilisateurs.

En particulier, selon un mode de réalisation, le modèle standard peut se présenter sous la forme d'un texte à trous, les trous dudit texte étant complétés avec les informations extraites.

En outre, les moyens de génération peuvent prévoir d'ajouter ou de supprimer des segments au texte à trous formant le modèle standard, en fonction des relations professionnelles existantes entre l'appelant 5 et l'utilisateur.

Par exemple, si l'appelant 5 est un collègue travaillant dans le même service que l'utilisateur, le modèle standard est complété avec l'ensemble des informations extraites de l'entrée.

Les moyens de génération du système 1 de messagerie vocale comprennent un moteur de conversion du texte en voix, l'annonce 9 personnalisée étant générée au moyen dudit moteur de conversion. En particulier, les informations extraites sont fournies à l'appelant 5 dans l'annonce 9 en étant insérées dans les trous du modèle standard au moyen du moteur de conversion de texte en voix.

En outre, les moyens de génération sont aptes, en l'absence d'une entrée relative à l'emploi du temps de l'utilisateur et/ou en l'absence d'un identifiant pour l'appelant 5 dans le réseau et/ou en l'absence de relations professionnelles entre ledit appelant et ledit utilisateur, à générer une annonce 9 de messagerie standard.

Par exemple, si l'appelant 5 n'a aucun identifiant dans le réseau social de l'entreprise et est donc une personne extérieure à ladite entreprise, il entendra l'annonce 9 de messagerie standard, et n'aura donc accès à aucune des informations relatives à l'emploi du temps de l'utilisateur.

De même, si l'appelant 5 a bien un identifiant dans le réseau social de l'entreprise, mais n'a aucune relation professionnelle directe avec l'utilisateur, il entendra également l'annonce 9 de messagerie standard.

De même, s'il n'y a aucune entrée relative à l'emploi du temps de l'utilisateur au moment de l'appel dans le réseau social de l'entreprise, et donc aucune information disponible sur ledit emploi du temps, l'appelant 5 entendra également l'annonce 9 de messagerie standard, et ce quelque soit ses relations, professionnelles ou non, avec l'utilisateur.

## Revendications

1. Procédé de génération d'une annonce par un système (1) de messagerie vocale d'un système de communications unifiées intégré dans un réseau social d'entreprise, ledit procédé prévoyant, à la réception par ledit système de messagerie d'un appel transféré depuis un terminal d'un utilisateur, de :
- vérifier la présence d'une entrée relative à l'emploi du temps dudit utilisateur dans ledit réseau social et d'extraire des informations de ladite entrée ;
- vérifier la présence dans ledit réseau d'un identifiant pour l'appelant (5) et l'existence de relations professionnelles entre ledit appelant et ledit utilisateur ;
ledit procédé prévoyant en outre de générer une annonce (9) personnalisée permettant audit appelant d'accéder à des informations extraites en fonction des relations professionnelles existantes entre ledit appelant et ledit utilisateur.

2. Procédé de génération d'une annonce selon la revendication 1, **caractérisé en ce qu'**il prévoit, en l'absence d'une entrée relative à l'emploi du temps de l'utilisateur et/ou en l'absence d'un identifiant pour l'appelant (5) dans le réseau et/ou en l'absence de relations professionnelles entre ledit appelant et ledit utilisateur, de générer une annonce (9) de messagerie standard.

3. Procédé de génération d'une annonce selon la revendication 1 ou 2, **caractérisé en ce que** la vérification de la présence d'une entrée relative à l'emploi du temps de l'utilisateur est initiée au moyen d'une requête (2) envoyée par le système (1) de messagerie vocale à un serveur (3) de calendrier du système de communications unifiées.

4. Procédé de génération d'une annonce selon l'une quelconque des revendications 1 à 3, **caractérisé en ce que** la vérification de la présence d'un identifiant pour l'appelant (5) et de l'existence de relations professionnelles entre ledit appelant et l'utilisateur est initiée au moyen d'une requête (6) envoyée par le système (1) de messagerie vocale à un outil (7) d'interconnexion du réseau social d'entreprise.

5. Procédé de génération d'une annonce selon l'une quelconque des revendications 1 à 4, **caractérisé en ce qu'**il prévoit de générer l'annonce (9) personnalisée à partir d'un modèle standard, ledit modèle étant complété avec les informations extraites en fonction des relations professionnelles existantes entre l'appelant (5) et l'utilisateur.

6. Procédé de génération d'une annonce selon l'une quelconque des revendications 1 à 5, **caractérisé en ce que** l'annonce (9) personnalisée est générée au moyen d'un moteur de conversion de texte en voix des informations extraites.

7. Système (1) de messagerie vocale d'un système de communications unifiées intégré dans un réseau social d'entreprise, ledit système comprenant :
- des moyens pour réceptionner un appel transféré depuis un terminal d'un utilisateur ;
- des moyens de vérification de la présence d'une entrée relative à l'emploi du temps dudit utilisateur dans ledit réseau social ;
- des moyens d'extraction des informations de ladite entrée ;
- des moyens de vérification de la présence dans ledit réseau d'un identifiant pour l'appelant (5) et de l'existence de relations professionnelles entre ledit appelant et ledit utilisateur ;
- des moyens de génération d'une annonce (9) personnalisée permettant audit appelant d'accéder à des informations extraites en fonction des relations professionnelles existantes entre ledit appelant et ledit utilisateur.

8. Système (1) de messagerie vocale selon la revendication 7, **caractérisé en ce que** les moyens de génération comprennent un moteur de conversion de texte en voix.

9. Système (1) de messagerie vocale selon la revendication 7 ou 8, **caractérisé en ce que** les moyens de génération sont aptes à générer l'annonce (9) personnalisée en complétant un modèle standard avec les informations extraites en fonction des relations professionnelles existantes entre l'appelant (5) et l'utilisateur.

10. Système (1) de messagerie vocale selon l'une quelconque des revendications 7 à 9, **caractérisé en ce que** les moyens de génération sont aptes, en l'absence d'une entrée relative à l'emploi du temps de l'utilisateur et/ou en l'absence d'un identifiant pour l'appelant (5) dans le réseau et/ou en l'absence de relations professionnelles entre ledit appelant et ledit utilisateur, à générer une annonce (9) de messagerie standard.
